Europäisches Patentamt

European Patent Office

Office européen des brevets

(11) Numéro de publication: **0 351 284**
**A2**

**DEMANDE DE BREVET EUROPEEN**

(21) Numéro de dépôt: 89401903.3

(22) Date de dépôt: 03.07.89

(51) Int. Cl.5: **G 02 B 6/28**
**H 04 J 15/00**

(30) Priorité: **05.07.88 FR 8809078**

(43) Date de publication de la demande:
**17.01.90 Bulletin 90/03**

(84) Etats contractants désignés: **DE FR GB IT SE**

(71) Demandeur: **COMMISSARIAT A L'ENERGIE ATOMIQUE**
**31/33, rue de la Fédération**
**F-75015 Paris (FR)**

(72) Inventeur: **Bourdinaud, Michel**
**6 rue Modigliani**
**F-91440 Bures Sur Yvette (FR)**

(74) Mandataire: **Mongrédien, André et al**
**c/o BREVATOME 25, rue de Ponthieu**
**F-75008 Paris (FR)**

(54) Dispositif de multiplexage en longueur d'onde utilisant une fibre optique et écran d'affichage en couleur portant application de ce dispositif.

(57) Dispositif de multiplexage en longueur d'onde utilisant une fibre optique (10) reliée à une des ses extrémités à un ensemble (12) de n tronçons de fibres optiques fluorescentes FM1,...,FMn mis bout à bout. Chaque tronçon Fmi, i entier allant de 1 à n, est dopé pour réémettre par fluorescence à une certaine longueur d'onde $\lambda Mi$ et est optiquement couplé à une source lumineuse Li d'excitation apte à produire la fluorescence, les différents tronçons FM1,...,FMn étant rangés à partir de l'extrémité de la fibre (10) dans l'ordre croissant de leur longueur d'onde de fluorescence $\lambda M1$,...,$\lambda Mn$ respective.

Application à la colorimétrie et au transport multiplexé d'informations.

La présente invention concerne aussi un écran d'affichage en couleur portant application du dispositif de multiplexage.

FIG. 1

Bundesdruckerei Berlin

EP 0 351 284 A2

## Description

# DISPOSITIF DE MULTIPLEXAGE EN LONGUEUR D'ONDE UTILISANT UNE FIBRE OPTIQUE ET ECRAN D'AFFICHAGE EN COULEUR PORTANT APPLICATION DE CE DISPOSITIF.

La présente invention a pour but objet un dispositif de multiplexage en longueur d'onde utilisant une fibre optique et un écran d'affichage en couleur portant application de ce dispositif. Elle trouve de multiples applications dans des domaines aussi variés que la colorimétrie ou le transport d'informations multiplexé.

Les fibres optiques permettant la propagation guidée d'un signal lumineux, introduit par exemple à l'aide d'une optique de focalisation à travers une extrémité de la fibre, le long de cette fibre vers son autre extrémité.

Le coeur de la fibre, réalisé en verre ou en matière plastique transparente, est enrobé dans une gaine transparente d'indice de réfraction plus faible que celui de la matière utilisée pour réaliser le coeur de la fibre, afin que l'interface entre le coeur et cette gaine soit le siège de phénomènes de réflexion totale de la lumière, permettant ainsi la transmission de celle-ci le long de la fibre sans perte notable.

Une catégorie particulière de fibres est constituée par les fibres optiques dites "fluorescentes". Le coeur de ces dernières est dopé à l'aide de produits appropriés, de telle sorte que la matière de la fibre, excitée par une irradiation lumineuse, réémet un rayonnement de façon isotrope. Une partie non négligeable de ce rayonnement est piégée au sein de la fibre et se propage par réflexion interne jusqu'aux extrémités de la fibre fluorescente. La fraction du rayonnement capturée est proportionnelle à l'écart $\Delta n$ entre les indices de réfraction du coeur et de la gaine optique de la fibre. Elle est typiquement de l'ordre de 5 %.

Il est possible d'exciter latéralement une telle fibre optique fluorescente évidemment dépourvue de gaine de protection.

De nombreux dispositifs exploitant de telles fibres fluorescentes sont connus et décrits par example dans le document FR-A-2 574 564.

L'invention concerne une application nouvelle de ces fibres fluorescentes excitées latéralement.

Le transport de signaux en multiplex consiste à injecter simultanément une pluralité de signaux différents dans un dispositif unique destiné à assurer leur acheminement d'un point à un autre. Cette technique permet de diminuer le nombre de dispositifs de transport. Elle est connue depuis longtemps déjà et appliquée à des signaux électriques de télécommunication par example. Le développement récent de télécommunications par fibres optiques pose le problème du transport de signaux optiques en multiplex. On cherche donc à obtenir l'injection simultanée de plusieurs signaux lumineux de couleurs différentes dans une fibre optique unique.

Il n'est malheureusement pas aisé d'introduire simultanément de manière classique un grand nombre de signaux optiques dans une même fibre. En effet, on a vu que l'introduction d'un seul signal nécessite une optique de focalisation et un réglage précis. On conçoit que l'injection simultanée d'un grand nombre de signaux augmente d'autant la difficulté de réglage et la complexité du dispositif.

La présente invention a pour but de pallier ces problèmes d'introduction simultanée de plusieurs signaux optiques dans une fibre. Pour cela on préco nise l'emploi de fibres fluorescentes agencées de manière nouvelle.

De façon plus précise, l'invention concerne un dispositif de multiplexage en longueur d'onde utilisant une fibre optique, caractérisé par le fait qu'il comprend, relié à une première extrémité de cette fibre, un premier ensemble de n tronçons de fibres fluorescentes FM1,...,FMn mis bout à bout, chaque tronçon FMi, i entier allant de 1 à n, étant dopé pour réémettre par fluorescence à une certaine longueur d'onde $\lambda$Mi et étant optiquement couplé à une source lumineuse d'excitation Li, apte à produire la fluorescence, les tronçons FM1,...,FMn étant rangés à partir de l'extrémité de la fibre dans l'ordre croissant de leur longueur de fluorescence respective $\lambda$M1,...,$\lambda$Mn.

Excités latéralement par les sources L1,...,Ln, les tronçons de fibres optiques fluorescentes FM1,...,FMn émettent de manière isotrope une lumière de fluorescence. Une partie de cette lumière est piégée dans les fibres optiques et se propage à l'intérieur de la fibre optique transparente.

Selon un mode préféré de réalisation, l'intensité lumineuse de chaque source Li est susceptible d'être modulée. Ainsi, on peut aussi moduler les émissions de lumière de fluorescence des différents tronçons de fibres optiques FM1,...,FMn. Cette modulation peut correspondre par exemple à un signal numérisé. L'invention permet donc le transport d'informations numérisées en multiplex dans la fibre optique transparente par exemple. Le multiplexage est effectué par l'intermédiaire des différentes longueurs d'onde $\lambda$M1,...,$\lambda$Mn de fluorescence, un signal numérisé étant porté par chaque longueur d'onde $\lambda$Mi.

Selon une variante de réalisation du dispositif, le premier ensemble de tronçons comporte trois tronçons de fibres optiques FM1, FM2, FM3 : le premier FM1 étant apte à émettre de la lumière de fluorescence bleue, le second FM2 étant apte à émettre de la lumière de fluorescence verte, le troisième FM3 étant apte à émettre de la lumière de fluorescence rouge.

On dispose ainsi d'une source trichrome aux couleurs primaires. La modulation de l'intensité des sources L1, L2, L3 permet de reconstituer à l'extrémité de la fibre transparente un large spectre coloré dû au mélange des trois couleurs primaires (rouge, vert, bleu) dans des proportions variables à volonté.

Dans une autre variante de réalisation, le dispositif selon l'invention comporte :
- relié à l'autre extrémité de la fibre un second ensemble de n tronçons de fibres optiques fluorescentes FD1,...,FDn mis bout à bout en une succession ordonnée telle que chaque tronçon FDi ne soit excité que par la lumière de fluorescence émise par un seul tronçon de fibre optique FMi du premier ensemble lui

EP 0 351 284 A2

correspondant, chaque tronçon FDi émettant à l'extérieur une lumière de fluorescence à la longueur d'onde $\lambda$Di après excitation, le tronçon FDn produisant la lumière de fluorescence de plus grande longueur d'onde $\lambda$Dn étant relié à cette autre extrémité de la fibre,

- n détecteurs D1,...,Dn aptes à détecter la lumière de fluorescence éventuellement émise latéralement par chacun des n tronçons de fibres optiques FD1,...,FDn respectivement, chacun de ces détecteurs D1,...,Dn délivrant sur des sorties S1,...,Sn, respectivement, un signal électrique correspondant à la lumière détectée,
- un analyseur de signaux électriques ayant n entrées E1,...,En reliées aux sorties S1,...,Sn, respectivement, des détecteurs D1,...,Dn.

Selon un aspect secondaire les détecteurs D1,...,Dn présentent un seuil de détection de manière à ne détecter que la lumière de fluorescence provenant des émissions par les tronçons de fibres optiques FD1,...,FDn leur correspondant dûes aux excitations provenant des tronçons FM1,...,FMn du premier ensemble et non la lumière de fluorescence émise par les tronçons FD1,...,FDn dûe à une excitation parasite, cette lumière de fluorescence parasite étant d'intensité très inférieure à la lumière de fluorescence dûe aux excitations provenant des tronçons FM1,...,FMn du premier ensemble.

Cette dernière variante de réalisation, selon l'aspect secondaire, permet d'assurer par exemple, le démultiplexage des informations transportées en multiplex à l'intérieur de la fibre optique transparente. Les différentes lumières de fluorescence modulées provenant du premier ensemble viennent exciter les tronçons de fibres optiques FD1,...,FDn du second ensemble après leur parcours dans la fibre optique transparente. Les tronçons FD1,...,FDn, agencés de manière à n'être excités que par une seule longueur d'onde $\lambda$M1,...,$\lambda$Mn respectivement, émettent à leur tour des lumières de fluorescence suivant les modulations de chaque source L1,...,Ln respectivement.

Les détecteurs D1,...,Dn placés latéralement en regard des tronçons de fibres optiques FD1,...,FDn délivrent sur leurs sorties S1,...,Sn respectives des signaux électriques analogues aux signaux numérisés modulant les sources L1,...,Ln.

L'analyseur permet de reconstituer par exemple des signaux analogiques ; ce peut-être des voix humaines, numérisées pour leur transport par fibre optique, dans une communication de type téléphonique par exemple.

Une partie de la lumière de fluorescence d'un tronçon de fibre optique peut exciter la fluorescence du tronçon amont. C'est pour éviter de prendre en compte ces émissions parasites d'intensité beaucoup plus faible que l'on fixe un seuil de détection sur la sensibilité des détecteurs D1,...,Dn.

La présente invention concerne aussi un écran d'affichage en couleur comportant plusieurs dispositifs de multiplexage. Les secondes extrémités des fibres optiques de ces dispositifs sont maintenues sensiblement perpendiculaires à une surface déterminée, chacune des extrémités formant un pixel de cet écran.

En adoptant la configuration du dispositif de multiplexage où trois tronçons de fibres fluorescentes émettant respectivement des lumières fondamentales bleue, verte et rouge sont reliés à chaque fibre, une modulation adaptée des lumières d'excitation des tronçons permet d'obtenir un pixel en couleur à chaque extrémité de fibre.

On peut ainsi multiplier par trois le nombre de pixels par rapport aux écrans connus. En effet, usuellement, une couleur primaire bleu, vert ou rouge est attribuée à chaque pixel monochrome, un pixel en couleur est alors obtenu par la réunion de trois pixels monochromes.

Selon un mode de réalisation préféré, cet écran est composé de modules formant des écrans élémentaires, les modules étant accolés les uns aux autres et étant excités indépendamment les uns des autres par des modules d'excitation auxquels ils sont reliés.

Selon une variante de ce mode de réalisation, un module d'excitation comprend :
- les ensembles de tronçons de fibres fluorescentes reliés optiquement aux fibres optiques, ces ensembles étant disposés côte à côte, et
- les sources lumineuses d'excitation optiquement couplées aux tronçons,
les sources lumineuses d'excitation étant formées par une source lumineuse principale et les cellules élémentaires d'un écran à cristaux liquides, ces cellules ayant une forme de bande au moins aussi longue et large qu'un tronçon, ces cellules présentant une transparence réglable.

Selon une variante de réalisation de l'écran, la source lumineuse principale est constituée par la lumière ambiante.

La source lumineuse principale peut être aussi constituée par une source de lumière artificielle.

Selon un autre mode de réalisation, le module d'excitation présente une forme cylindrique, les ensembles de tronçons de fibre fluorescente étant disposés côte à côte de manière à former un cylindre bordé en son intérieur par un premier écran plat à cristaux liquides formant lui-même un cylindre coaxial et dont les pixels présentent une forme de bande apte à masquer un tronçon, le cylindre formé par les ensembles de tronçons étant bordé en son extérieur par un second écran plat à cristaux liquides semblable au premier et formant lui-même un cylindre coaxial, une source de lumière artificielle étant disposée au centre des cylindres.

D'autres caractéristiques et avantages de l'invention apparaîtront mieux après la description qui suit, donnée à titre explicatif et nullement limitatif. Cette description se réfère à des dessins annexés sur lesquels :
- la figure 1 représente schématiquement un dispositif selon l'invention,
- la figure 2 représente schématiquement les spectres d'absorption et de fluorescence du diméthyl-POPOP, colorant utilisable comme dopant d'une fibre optique fluorescente,
- la figure 3 illustre schématiquement une variante de réalisation d'un dispositif selon l'invention,
- la figure 4 illustre schématiquement une application de l'invention dans le cas du transport de signaux

3

lumineux en multiplex,

- la figure 5 représente schématiquement un écran conforme à l'invention et portant application de dispositifs de multiplexage,

- la figure 6 représente schématiquement un module d'affichage d'un écran conforme à l'invention relié à un module d'excitation,

- la figure 7 représente schématiquement une variante de réalisation d'un module d'excitation.

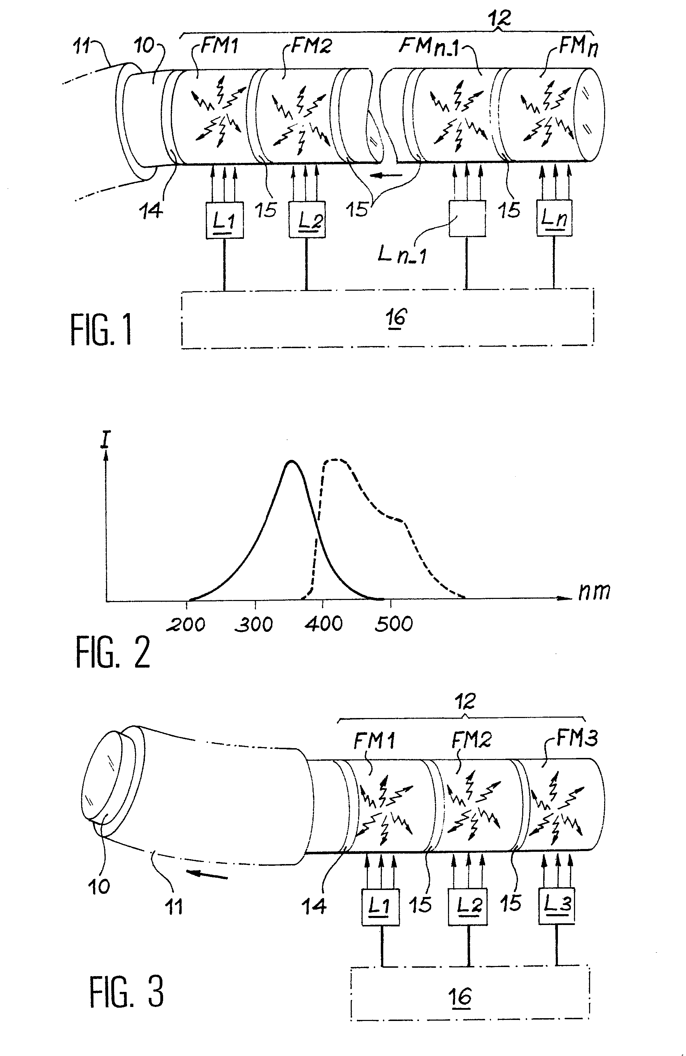

La figure 1 représente schématiquement un dispositif selon l'invention. Une fibre optique transparente 10 est reliée à un ensemble 12 de n tronçons de fibres optiques fluorescentes FM1,...,FMn. La connexion 14 quasi transparente entre la fibre et l'ensemble de tronçons, est réalisée après polissage des fibres, par des techniques connues de l'homme du métier, au moyen de colle transparente du genre époxy ou cyanoacrylate par exemple. Les connexions 14, 15 reliant différents tronçons entre eux ou un tronçon à la fibre 10 rencontrées dans la suite de la description sont de ce type.

Les différents tronçons de fibres optiques FM1,...,FMn sont dopés chacun avec un colorant organique fluorescent différent.

La figure 2 représente schématiquement les spectres d'absorption (en trait fort) et de fluorescence (en trait tireté) du diméthyl-POPOP. De tels spectres se retrouvent pour d'autres colorants organiques, aux valeurs des longueurs d'onde près. On constate que les deux spectres sont décalés, l'excitation (absorption) est centrée sur une longueur d'onde de 360 nm environ alors que l'émission de fluorescence s'effectue autour de 415 nm. L'excitation s'effectue à plus haute énergie (à plus petite longueur d'onde) que l'émission de fluorescence. Les pieds des deux spectres se recouvrent partiellement, autour de 400 nm dans le cas du diméthyl-POPOP : un colorant peut donc réabsorber une partie de sa propre émission de fluorescence.

Le rendement quantique des colorants fluorescents organiques est excellent de l'ordre de 95 %. Seuls 5 % des photons d'excitation sont perdus en désexcitation non radiative.

Les fibres optiques fluorescentes sont des fibres optiques plastiques (F.O.P.) par exemple. Ces dernières présentent de nombreux avantages : elles restent flexibles au diamètre d'utilisation qui est de 1,5 mm par exemple. Ce diamètre important facilite la réalisation des connexions 14. Les F.O.P. se prêtent au dopage par des colorants organiques.

Etant donné la large gamme de colorants existants, on peut aisément couvrir tout le spectre visible et même au-delà (le spectre qu'il est possible de couvrir en utilisant différents colorants s'étend de 250 nm à 1000 nm avec des largeurs de bande spectrale pour chaque colorant de l'ordre de 50 nm). Le coeur de la F.O.P. peut être en polystyrène ou en polyméthylmétacrylate (P.M.M.A.) par exemple.

On voit encore sur la figure 1 que les différents tronçons de fibres optiques FM1,...,FMn sont reliés entre eux par des connexions 15. Les tronçons FM1,...,FMn sont aussi courts que possible : leur longueur est comprise entre 1 et 5 cm par exemple. Cette longueur résulte d'une optimisation calculée en fonction de la concentration du colorant contenu dans le coeur de la F.O.P. Cette concentration est comprise entre $10^{-4}$ et $10^{-3}$ gramme de colorant par gramme de matériau du coeur. Le choix de la concentration résulte d'un compromis entre la nécessité d'une bonne conversion de la lumière d'excitation (concentration élevée) et d'une faible réabsorption de la lumière de fluorescence par le colorant lui-même dûe au recouvrement des spectres d'absorption et d'émission (concentration faible).

L'ensemble 12 est relié à une première extrémité de la fibre optique transparente 12 par le tronçon de fibre optique FM1 émettant la lumière de fluorescence de plus petite longueur d'onde $\lambda M1$. De plus les différents tronçons de fibres optiques FM1,...,FMn de l'ensemble 12 sont reliés en une succession selon l'ordre croissant de leur longueur d'onde de fluorescence $\lambda M1,...,\lambda Mm$ respectivement (du bleu vers le rouge). Autrement dit, dans cet arrangement, la lumière de fluorescence émise par un tronçon de fibre optique FMi et se propageant vers la fibre optique transparente 10 à travers les tronçons de fibres optiques FMi-1,...,FM1 (propagation vers la gauche sur la figure 1) n'est pas absorbée par ces derniers. Les spectres d'absorption et d'émission des colorants ayant une largeur d'environ 50 nm, on doit prendre garde à ce que les différents spectres d'absorption des tronçons de fibres optiques FMi-1,...FM1 ne recouvre pas le spectre d'émission du tronçon de fibre optique FMi. Mais cette condition est aisément respectée si l'on arrange l'ensemble 12 selon l'ordre croissant des longueurs d'onde.

Les différents tronçons de fibres optiques FM1,...,FMn sont excités par des sources L1,...,Ln respectivement. Les sources L1,...,Ln illuminent latéralement les tronçons de fibres optiques FM1,...,FMn qui sont évidemment dépourvus de gaine de protection mécanique (alors qu'une telle gaine 11 protège la fibre optique 10). Les sources L1,...,Ln peuvent être des diodes électroluminescentes (D.E.L.) dont le rayonnement est convenablement focalisé pour n'exciter qu'un tronçon de fibre optique à la fois.

Les sources L1,...,Ln peuvent aussi être des lampes à large bande spectrale. Si la lumière d'excitation provient de D.E.L. alors les longueurs d'onde d'émission de ces dernières doivent être en accord avec la bande d'absorption des tronçons de fibres optiques en regard.

Les diverses sources L1,...,Ln sont reliées à un modulateur 16 qui permet de faire varier à volonté l'intensité de la lumière émise par chaque source. Par cet intermédiaire, on peut faire varier l'intensité des lumières de fluorescence.

La figure 3 illustre schématiquement une première variante de réalisation d'un dispositif selon l'invention. Cette variante peut être appliquée à la réalisation d'une source lumineuse servant d'étalon en colorimétrie par exemple. Dans cette variante de réalisation, on n'utilise que trois tronçons de fibres optiques fluorescentes FM1, FM2, FM3 dopés respectivement par du diméthyl-POPOP (émettant de la lumière bleue), par de la Coumarine 520 (émettant de la lumière verte) et de la Rhodamine 6G (émettant de la lumière rouge) par exemple. Ces trois tronçons de fibre optique FM1, FM2, FM3 sont excités par trois sources respectivement, L1, L2, L3 dont l'intensité est modulable grâce au modulateur 16.

Ces trois tronçons FM1, FM2 et FM3 forment l'ensemble 12 relié à une première extrémité de la fibre optique transparente 10. Une excitation simultanée des trois tronçons de fibres optiques FM1, FM2, FM3, mélange les lumières de fluorescence aux couleurs primaires rouge, verte et bleue dans la fibre optique transparente 10. Une émission de lumière blanche est observée à la deuxième extrémité longitudinale de cette dernière. Cette source de lumière en bout de fibre peut servir d'étalon colorimétrique. En faisant varier l'intensité des émissions fluorescentes par l'intermédiaire du modulateur 16, on peut faire varier à volonté la couleur de l'émission en bout de fibre 10. On dispose donc, à partir des trois couleurs fondamentales émises par les tronçons de fibres optiques FM1, FM2, FM3, d'une source de lumière de couleur variable à volonté.

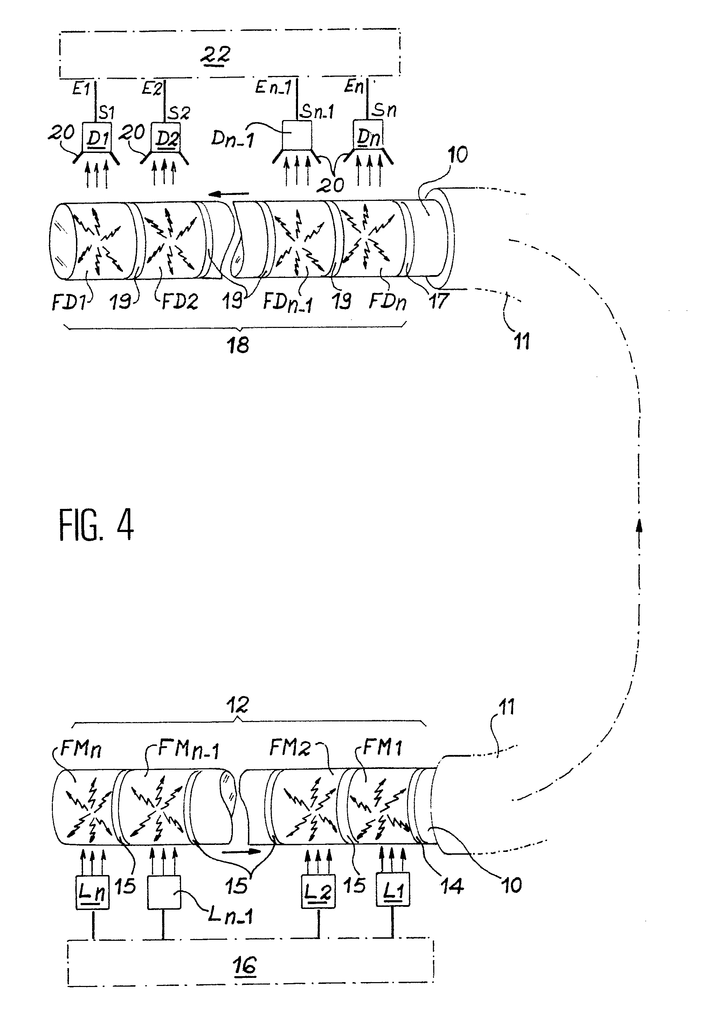

La figure 4 illustre schématiquement une application de l'invention dans le cas du transport de signaux lumineux en multiplex. Une première extrémité longitudinale de la fibre optique transparente 10 est reliée par une connexion 14 à un premier ensemble de n tronçons de fibres optiques fluorescentes FM1,...,FMn. n sources L1,...,Ln permettent l'excitation latérale des tronçons FM1,...,FMn. L'intensité de la lumière émise par chaque source L1,...,Ln est modulable grâce au modulateur 16. Cette première partie du dispositif est conforme à la description qui a été faite de la figure 1.

En vue d'une application au transport multiplexé d'informations, les sources L1,...,Ln sont choisis aptes à être modulées de manière rapide (à une fréquence de l'ordre de la centaine de MHz). Le temps de réponse des colorants à une excitation est de l'ordre de la nanoseconde et ne limite donc pas la bande passante d'un tel système.

Cette première partie réalise un multiplexage des informations. En effet, si chaque source L1,...,Ln est modulée suivant un signal numérisé, alors chaque tronçon FM1,...,FMn émet une lumière de fluorescence elle aussi modulée suivant le signal numérisé. Le rayonnement de fluorescence des tronçons de fibres optiques FM1,...,FMn est isotrope, mais une partie non négligeable (de l'ordre de 4 à 5 %) est piégée et guidée dans la fibre optique transparente 10. Les différentes lumières de fluorescentre transportent donc simultanément une information sur la même ligne.

Ce type de transport de l'information nécessite un dispositif permettant la séparation des différents signaux numérisés. Ce dispositif est réalisé par un second ensemble 18 de tronçons de fibres optiques fluorescentes FD1,...,FDn correspondant respectivement aux tronçons FM1,...,FMn. Ce second ensemble 18 est raccordé par une connexion 17 à la second extrémité longitudinale de la fibre optique transparente 10. La fluorescence de chaque tronçon FDi est apte à être excitée par la lumière de fluorescence du tronçon de fibre optique lui correspondant FMi. Bien entendu, les tronçons FD1,...,FDN du second ensemble 18 sont reliés entre eux, deux à deux, par des connexions 19 en une succession ordonnée telle que chaque tronçon FDi ne soit excité que par la lumière de fluorescence émise par un seul tronçon FMi du premier ensemble 12. Cette condition revient à relier le tronçon FDn produisant la lumière de fluorescence de plus grande longueur d'onde $\lambda$Dn à la fibre optique transparente 10.

Chacun des tronçons de fibres optiques FD1,...,FDn est dépourvu de gaine de protection mécanique et émet une lumière de fluorescence de manière isotrope. Une partie de cette lumière est donc émise latéralement. Des détecteurs D1,...,Dn sont placés latéralement en regard de chacun des tronçons FD1,...,FDn. Ces détecteurs peuvent être du type photodiode au silicium par example. Chaque détecteur Di peut être muni de volets 20 interceptant la lumière provenant des tronçons de fibre optique FDi-1 et FDi+1 adjacents au tronçon de fibre optique FDi.

L'ensemble des tronçons de fibres optiques FD1,...,FDn munis des détecteurs D1,...,Dn correspondants peut-être placé dans un boîtier (non représenté) afin de le protéger des lumières extérieures parasites. Il en est de même pour l'ensemble des tronçons FM1,...,FMn et des sources L1,...,Ln correspondantes.

Les détecteurs D1,...,Dn délivrent des signaux électriques correspondant aux signaux optiques détectés sur leurs sorties S1,...,Sn respectives. Un analyseur 22 de signaux électriques est relié par n entrées E1,...,En aux sorties S1,...,Sn des détecteurs D1,...,Dn. Cet analyseur 22 permet de reconstituer des signaux analogiques à partir des signaux numérisés détectés par exemple.

Un tronçon de fibre optique FDi du second ensemble 18, comme d'ailleurs un tronçon de fibre optique FMi du premier ensemble 12, émet un rayonnement de fluorescence isotrope. Environ 8 % de ce rayonnement sont piégés dans la fibre optique elle-même : 4 % se propagent dans un sens et 4 % dans l'autre. Etant donné l'arrangement dans lequel sont ordonnés les différents tronçons des premier et second ensembles 12, 18, la lumière de fluorescence peut se propager dans un sens sans être absorbée par les colorants qu'elle rencontre. Dans l'autre sens, par contre, elle peut être absorbée et exciter la fluorescence d'un autre tronçon de fibre optique. Si une source Li excite un tronçon de fibre optique FMi du premier ensemble 12 avec une intensité Io, alors environ 4 % de Io (en supposant le rendement quantique idéalement égal à 100 %) se propageront vers l'extrémité de l'ensemble 12 qui n'est pas reliée à la fibre optique transparente 10 (sens dans lequel il peut y avoir absorption). Si les 4 % de Io (à la longueur d'onde $\lambda$Mi) excitent à leur tour un tronçon FMi+i par exemple, alors ils donneront lieu à une fluorescence de 4 %.(4 %.Io) à la longueur d'onde $\lambda$Mi+1 dans les deux sens de la fibre. Ce phénomène se produit en cascade mais engendre des intensités de plus en plus faibles. Les 4 %.(4 %.Io) à la longueur d'onde $\lambda$Mi+1 après leur propagation à l'intérieur de la fibre optique transparente 10 vont exciter le tronçon de fibre optique FDi+1. Ce tronçon de fibre optique FDi+1 émet donc une première fluorescence à la longeur d'onde $\lambda$Di+1 correspondant au signal numérisé sur laquelle se superpose une fluorescence parasite à la même longueur d'onde dûe aux 4%.(4 %.Io).

D'autre part, un phénomène analogue à la production des 4 %.(4 %.Io) à la longueur d'onde $\lambda Mi + 1$ peut se produire dans le second ensemble 18 et ajouter encore une fluorescence parasite à la longueur d'onde $\lambda Di + 1$.

Ces deux types de fluorescences parasites sont, comme on l'a vu, d'intensité beaucoup plus faible que la fluorescence transportant le signal numérisé. Pour qu'elles ne perturbent pas la détection du signal numérisé, il suffit d'imposer un seuil de détection à la sensibilité des détecteurs D1,...,Dn. Ainsi, on peut s'affranchir de ces fluorescences parasites.

A titre d'exemple, on peut citer quatre colorants dopant quatre tronçons de fibres optiques fluorescentes FM1, FM2, FD1, FD2 :

Premier ensemble 12

$$
\begin{cases}
\text{FM1 : diméthyl-P.O.P.O.P de longueur d'onde centrale de fluorescence } \lambda M1 : 415 \text{ nm} \\[2ex]
\text{FM2 : coumarine 520 de longueur d'onde centrale de fluorescence } \lambda M2 : 520 \text{ nm}
\end{cases}
$$

Second ensemble 18

$$
\begin{cases}
\text{FD1 : coumarine 550 de longueur d'onde centrale de fluorescence } \lambda D1 : 550 \text{ nm} \\[2ex]
\text{FD2 : rhodamine 6G de longueur d'onde centrale de fluorescence } \lambda D2 : 590 \text{ nm}
\end{cases}
$$

Il est possible d'estimer le rendement en puissance d'un système complet (abstraction faite des pertes minimes de transmission dans la ligne) ; il dépend des paramètres suivants :
- taux de capture de la lumière provenant d'une source : environ 4 %,
- rendement quantique des différents colorants mis en jeu : au moins égal à 95 %,
- pertes de couplage des tronçons de fibres optiques aux connexions : transparence de l'ordre de 80 %,
- taux de capture de la lumière par le détecteur : environ 20 %.

Au total, on peut estimer que le rendement du dispositif est de l'ordre de 0,4 %.

La présente invention concerne aussi un écran d'affichage en couleur portant application du dispositif de multiplexage tel que représenté schématiquement sur la figure 3, c'est-à-dire où une fibre optique 10 est reliée à un ensemble de trois tronçons de fibres fluorescentes émettant respectivement une lumière de fluorescence dans l'une des trois couleurs primaires bleu, vert, et rouge.

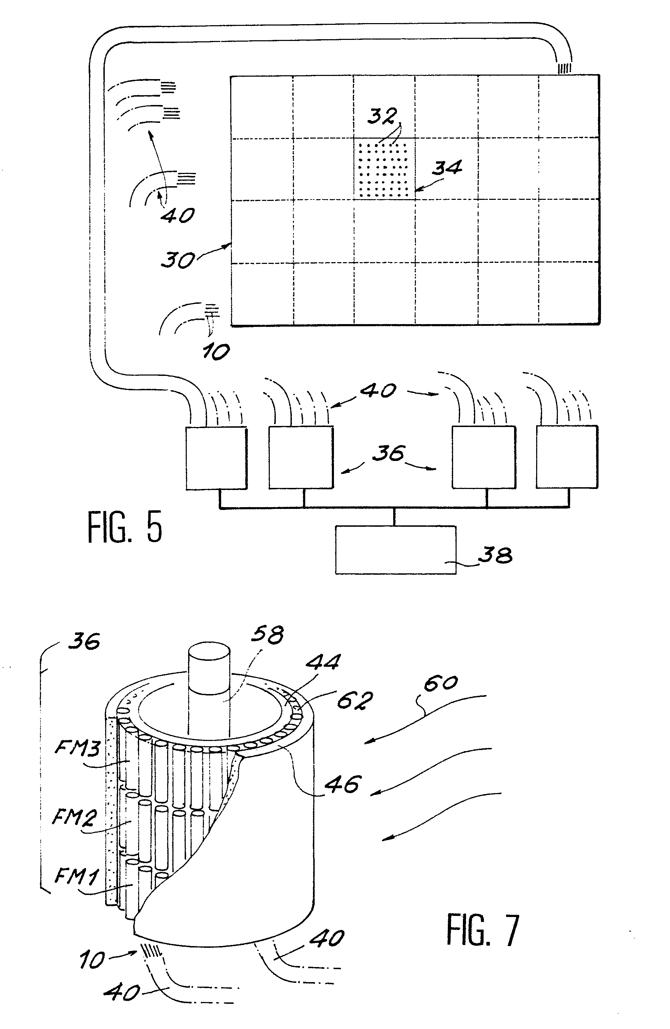

Un exemple de réalisation d'un tel écran est représenté schématiquement sur la figure 5.

Les extrémités 32 de plusieurs fibres optiques 10 sont assemblées perpendiculairement à une surface déterminée, un plan dans l'exemple représenté, pour constituer l'écran 30. Chaque extrémité 32 correspond à un pixel de l'écran.

La résolution de l'écran peut être extrêmement élevée puisque, avec des fibres jointives, elle est limitée par le diamètre des fibres 10 qui peut être inférieur à 0,1 mm. Les fibres 10 peuvent par exemple être en silice.

Les tronçons de fibres fluorescentes auxquels sont reliées les fibres 10 présentent quant à eux un diamètre pouvant aller de 0,5 à 1 mm, un grand diamètre facilitant l'excitation et les connexions.

Un écran large de 2 m et long de 3 m comprend environ $3.10^6$ fibres optiques 10 séparées les unes des autres de 3 mm. Pour permettre sa réalisation, comme on peut le voir sur la figure 5, un tel écran 30 est constitué d'écrans élémentaires ou modules 34 accolés les uns aux autres et excités indépendamment par des modules d'excitation 36 connectés à un circuit de commande 38.

Comme on le verra plus loin, un module d'excitation 36 comprend les ensembles de tronçons de fibres fluorescentes reliés aux fibres optiques 10 et les sources lumineuses d'excitation correspondantes. La couleur d'un pixel 32 résulte du mélange des trois couleurs primaires (rouge, vert, bleu) en proportion déterminée par l'intensité lumineuse excitant chacun des tronçons fluorescents reliés à la fibre 10 correspondant à ce pixel.

Les fibres optiques 10 sont réunies en câbles plats 40 connectés aux modules d'excitation 36. Le brevet français publié sous le n° 2 574 562 décrit un procédé d'ourdissage permettant la réalisation de tels câbles plats constitués de fibres optiques jointives.

Les modules d'excitation 36 sont commandés par le circuit 38 qui gère l'intensité et la couleur des différents pixels en contrôlant la modulation des sources lumineuses d'excitation.

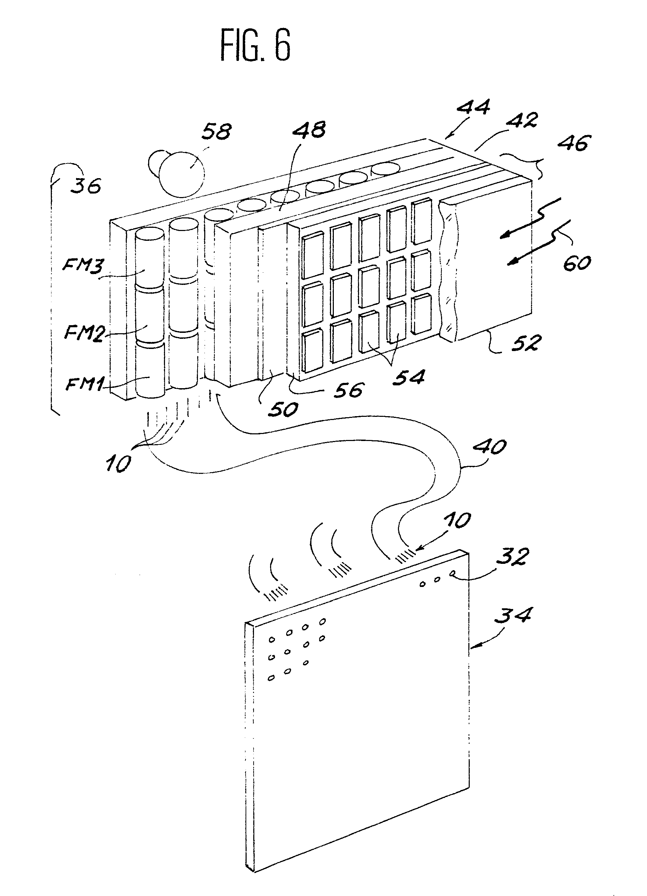

La figure 6 représente schématiquement un module d'affichage (écran élémentaire) relié à un module d'excitation.

Le module d'affichage 34 est constitué par une structure de forme carrée ou rectangulaire par exemple et supportant les extrémités 32 des fibres optiques 10. Ces extrémités 32 peuvent être rangées en lignes ou disposées selon un motif déterminé, carré ou hexagonal par exemple. Une structure peut par exemple supporter 100 000 extrémités 32 de fibres optiques espacées les unes des autres de 3 mm.

Les fibres optiques sont donc réunies en câbles plats 40 qui assurent la connexion avec le module d'excitation 36. Les fibres optiques 10 sont reliées à des ensembles de tronçons de fibres fluorescentes FM1, FM2, FM3 de manière identique à celle décrite précédemment ; les ensembles sont sensiblement contigüs et disposés selon une rangée 42.

Cette rangée 42 est prise en sandwich entre deux écrans plats à cristaux liquides 44 et 46 identiques.

L'écran 46 est représenté en écorché : on peut voir qu'il comprend un premier support isolant et transparent 48, en verre par exemple, supportant une électrode transparente 50, dont les dimensions déterminent la surface active de l'écran.

Un second support isolant et transparent, 52 en verre par exemple, supporte des électrodes 54 transparentes, en forme de bande et disposées selon trois lignes.

Le cristal liquide 56 est maintenu entre les électrodes 54 et 50. Une cellule élémentaire de l'écran à cristaux liquides est donc formée dans l'intervalle entre une électrode segmentée 54 et l'électrode unique 50. Elle présente donc une forme de bande.

Le circuit de commande 38 (non représenté sur cette figure) est connecté aux diverses électrodes 50 et 54. Il délivre des tensions de commande et d'adressage convenables et permettant de contrôler l'état de transparence des cellules élémentaires.

Chacune est positionnée en face d'un tronçon de fibre fluorescente et forme un écran à transparence réglable propre à un tronçon, la largeur et la longueur de la cellule étant au moins égales à celles du tronçon, dont le degré d'excitation est ainsi commandé par la transparence de cet écran.

Les sources lumineuses d'excitation couplées aux différents tronçons sont donc composées par les cellules d'un des écrans à cristaux liquides illuminés par une source lumineuse principale : soit la lumière ambiante 60, soit une source de lumière artificielle 58.

L'écran à cristaux liquides 44 est interposé entre la rangée 42 des ensembles de tronçons fluorescents et la source de lumière artificielle 58 qui délivre une lumière apte à exciter la fluorescence des tronçons.

Par contre, l'écran à cristaux liquides 46 recouvre la rangée 42 des ensembles de tronçons de fibres fluorescentes de manière à masquer la lumière ambiante 60. Lorsque cette dernière est suffisante, la source de lumière artificielle 58 est mise hors service et les tronçons sont excités par la lumière ambiante modulée par l'écran à cristaux liquides 46 commandé par le circuit de commande 38.

La figure 7 représente schématiquement une variante de réalisation d'un module d'excitation.

Ce dernier présente ici une forme cylindrique : les ensembles de tronçons de fibre fluorescente sont disposés côte à côte de manière à former un cylindre bordé en son intérieur par un premier écran plat à cristaux liquides 44 formant lui-même un cylindre coaxial et dont les cellules élémentaires présentent une forme de bande apte à masquer un tronçon.

Le cylindre 62 est bordé en son extérieur par un second écran plat à cristaux liquides 46, semblable au premier, formant lui-même un cylindre coaxial.

Dans cette variante de réalisation, la source de lumière artificielle 58 est disposée au centre des cylindres ; elle émet une lumière uniformément intense sur tout le cylindre 62. Cette lumière est modulée par l'écran à cristaux liquides 44.

Lorsque la lumière ambiante 60 est suffisante pour exciter la fluorescence des tronçons de fibre fluorescente, la source de lumière artificielle 58 est mise hors service. La lumière ambiante 60 est alors modulée par l'écran à cristaux liquides 46.

**Revendications**

1. Dispositif de multiplexage en longueur d'onde utilisant une fibre optique, caractérisé par le fait qu'il comprend, relié à une première extrémité de cette fibre (10), un premier ensemble (12) de n tronçons de fibres fluorescentes FM1,...,FMn mis bout à bout, chaque tronçon FMi, i entier allant de 1 à n, étant dopé pour réémettre par fluorescence à une certaine longueur d'onde λMi et étant optiquement couplé à une source lumineuse d'excitation Li, apte à produire la fluorescence, les tronçons FM1,...,FMn étant rangés à partir de l'extrémité de la fibre (10) dans l'ordre croissant de leur longueur de fluorescence respective λM1,...,λMn

2. Dispositif selon la revendication 1, caractérisé en ce que l'intensité lumineuse de chaque source Li est susceptible d'être modulée.

3. Dispositif selon l'une quelconque des revendications 1 et 2, caractérisé en ce que le premier ensemble (12) comporte trois tronçons de fibres optiques FM1, FM2, FM3 : le premier FM1 plus proche de la fibre (10) étant apte à émettre de la lumière de fluorescence bleue, le second FM2 étant apte à émettre de la lumière de fluorescence verte, le troisième FM3 étant apte à émettre de la lumière de fluorescence rouge.

4. Dispositif selon l'une quelconque des revendications 1 et 2, caractérisé en ce qu'il comporte
- relié à l'autre extrémité de la fibre (10) un second ensemble (18) de n tronçons de fibres optiques fluorescentes FD1,...,FDn mis bout à bout en une succession ordonnée telle que chaque tronçon FDi ne soit excité que par la lumière de fluorescence émise par un seul tronçon de fibre optique FMi du premier ensemble (12) lui correspondant, chaque tronçon FDi émettant une lumière de fluorescence à la longueur d'onde $\lambda Di$ après excitation, le tronçon FDn produisant la lumière de fluorescence de plus grande longueur d'onde $\lambda DNn$ étant relié à cette autre extrémité de la fibre (10),
- n détecteurs D1,...,Dn aptes à détecter la lumière de fluorescence éventuellement émise latéralement par chacun des n tronçons de fibres optiques FD1,...,FDn respectivement, chacun de ces détecteurs D1,...,Dn délivrant sur des sorties S1,...,Sn, respectivement, un signal électrique correspondant à la lumière détectée,
- un analyseur (22) de signaux électriques ayant n entrées E1,...,En reliées aux sorties S1,...,Sn, respectivement, des détecteurs D1,...,Dn.

5. Dispositif selon la revendication 4, caractérisé en ce que les détecteurs D1,...,Dn présentent un seuil de détection de manière à ne détecter que la lumière de fluorescence provenant des émissions par les tronçons FD1,...,FDn leur correspondant dûes aux excitations provenant des tronçons de fibres optiques FM1,...,FMn du premier ensemble (12) et non la lumière de fluorescence émise par les tronçons de fibres optiques FD1,...,FDn dûe à une excitation parasite, cette lumière de fluorescence parasite étant d'intensité très inférieure à la lumière de fluorescence dûe aux excitations provenant des tronçons de fibres optiques FM1,...,FMn du premier ensemble (12).

6. Ecran d'affichage en couleur comportant plusieurs dispositifs conformes à la revendication 3, les secondes extrémités des fibres (10) étant maintenues sensiblement perpendiculaires à une surface déterminée, chacune des extrémités formant un pixel de cet écran.

7. Ecran selon la revendication 6, caractérisé en ce qu'il est composé de modules 34 formant des écrans élémentaires, les modules 34 étant accolés les uns aux autres et étant excités indépendamment les uns des autres par des modules d'excitation 36 auxquels ils sont reliés.

8. Ecran selon la revendication 7, caractérisé en ce qu'un module d'excitation comprend
- les ensembles de tronçons de fibres fluorescentes reliés optiquement aux fibres optiques (10), ces ensembles étant disposés côte à côte, et
- les sources lumineuses d'excitation optiquement couplées aux tronçons,
les sources lumineuses d'excitation étant formées par une source lumineuse principale et les cellules élémentaires d'un écran à cristaux liquides, ces cellules ayant une forme de bande au moins aussi longue et large qu'un tronçon, ces cellules présentant une transparence réglable.

9. Ecran selon la revendication 8, caractérisé en ce que la source lumineuse principale est constituée par la lumière ambiante.

10. Ecran selon la revendication 8, caractérisé en ce que la source lumineuse principale est constituée par une source de lumière artificielle.

11. Ecran selon la revendication 8, caractérisé en ce que le module d'excitation présente une forme cylindrique, les ensembles de tronçons de fibre fluorescente étant disposés côte à côte de manière à former un cylindre bordé en son intérieur par un premier écran plat à cristaux liquides formant lui-même un cylindre coaxial et dont les cellules élémentaires présentent une forme de bande apte à masquer un tronçon, le cylindre formé par les ensembles de tronçons étant bordé en son extérieur par un second écran plat à cristaux liquides identique au premier et formant lui-même un cylindre coaxial, une source de lumière artificielle étant disposée au centre des cylindres.

FIG. 1

FIG. 2

FIG. 3

FIG. 4

FIG. 5

FIG. 7

# FIG. 6